# EUROPÄISCHE PATENTANMELDUNG

(11) **EP 2 279 893 A2**
(43) Veröffentlichungstag der Anmeldung: **02.02.2011**
(21) Anmeldenummer: 10007485.5
(22) Anmeldetag: 20.07.2010
(51) Int. Cl.: B60L 11/18

(54) **Lade-Steckdose zur Aufladung eines Elektroautos, mit Mitteln zur Kommunikation zwischen Lade-Steckdose und Fahrzeug**

(30) Priorität: 01.08.2009 DE 102009035827
(71) Anmelder: ABB AG, 68309 Mannheim (DE)
(72) Erfinder: Lange, Manfred, Dipl.-Ing., 44229 Dortmund (DE); Wilms, Benjamin, Dipl.-Ing., 58802 Balve (DE)

(57) **Zusammenfassung**

Es wird eine Lade-Steckdose (1, 2, 3) zur Aufladung eines Elektroautos über ein zwischen Eingangs-Anschlussklemmen (6) der Lade-Steckdose und einer elektrischen Kupplung (32) des aufzuladenden Fahrzeug (31) verlaufendes Lade-Kabel (21, 26, 29) vorgeschlagen, mit Mitteln zur Daten-Kommunikation zwischen Lade-Steckdose und Fahrzeug, wobei diese Mittel eine der Lade-Steckdose (1, 2, 3) zugeordnete Auswerte-/Verarbeitungseinheit (7) inklusive einer daran angeschlossenen Anzeige/Eingabeeinheit (14) sowie einen elektrisch mit der elektrischen Kupplung (32) verbundenen Fahrzeug-Rechner (33) mit Auswerte-/Verarbeitungseinheit umfassen und die Signalumwandlung der kommunizierten Daten jeweils in den Auswerte-Nerarbeitungseinheiten erfolgt.

## Beschreibung

### Beschreibung

Die Erfindung betrifft eine Lade-Steckdose zur Aufladung eines Elektroautos, mit Mitteln zur Kommunikation zwischen Lade-Steckdose und Fahrzeug.

Führende Autohersteller und Energiekonzerne haben sich auf einen gemeinsamen Fahrzeug-Steckverbinder für Elektroautos mit hierzu korrespondierender elektrischer Kupplung geeinigt (Industrie-Standard), mit dem Fahrzeugbesitzer weltweit die Akkumulatoren ihrer Elektroautos aufladen können.

Der Erfindung liegt die Aufgabe zugrunde, eine Lade-Steckdose zur Aufladung eines Elektroautos mit erweiterten Anwendungsmöglichkeiten anzugeben.

Diese Aufgabe wird erfindungsgemäß gelöst durch eine Lade-Steckdose zur Aufladung eines Elektroautos über ein zwischen Eingangs-Anschlussklemmen der Lade-Steckdose und einer elektrischen Kupplung des aufzuladenden Fahrzeug verlaufendes Lade-Kabel, mit Mitteln zur Daten-Kommunikation zwischen Lade-Steckdose und Fahrzeug, wobei diese Mittel eine der Lade-Steckdose zugeordnete Auswerte-/Verarbeitungseinheit inklusive einer daran angeschlossenen Anzeige-/Eingabeeinheit sowie einen elektrisch mit der elektrischen Kupplung verbundenen Fahrzeug-Rechner mit Auswerte-/Verarbeitungseinheit umfassen und die Signalumwandlung der kommunizierten Daten jeweils in den Auswerte-/Verarbeitungseinheiten erfolgt.

Die mit der Erfindung erzielbaren Vorteile bestehen insbesondere darin, dass interessierende Daten, wie Verbrauchs- und/oder Leistungsdaten des Fahrzeuges, aktueller Ladestrom, Ende des Aufladeprozesses usw. vorzugsweise in einer Kommunikations-Baueinheit in der Nähe der oder unmittelbar in der Lade-Steckdose angezeigt werden können. Des Weiteren ist es möglich, gewünschte Daten, wie ein Navigationsziel oder einen Telefonbucheintrag, dem Fahrzeug zu übermitteln.

Zweckmäßige Ausgestaltungen der Erfindung sind in den Unteransprüchen gekennzeichnet.

So kann die Daten-Kommunikation alternativ zur "kabelgebundenen" Übertragung über das Lade-Kabel auch durch eine Funk-Übertragung zwischen einer der Lade-Steckdose zugeordneten Funkeinheit inklusive Antenne und einer Funkeinheit inklusive Antenne des Fahrzeuges erfolgen.

Für eine Daten-Kommunikation mit externen Geräten kann ein USB-Stecker elektrisch mit der Anzeige-/Eingabeeinheit der Lade-Steckdose in Verbindung stehen.

Der elektrische Ausgangs-Anschluss kann in Form eines Steckdosen-Gerätesockels zum Einführen eines Steckverbinders eines Ladekabels ausgebildet sein, wodurch eine Unterputz-Ausführung sowohl der Lade-Steckdose selbst als auch der Anzeige-/Eingabeeinheit realisierbar ist.

Alternativ kann der elektrische Ausgangs-Anschluss in Form eines innerhalb des Gehäuses der Lade-Steckdose befindliches und bedarfsweise aus dem Gehäuse herausziehbaren Lade-Kabels inklusive endseitigem Steckverbinder ausgebildet sein. Dabei ergibt sich als erste Möglichkeit, eine automatische Kabelaufwicklung des Lade-Kabels im Gehäuse der Lade-Steckdose vorzusehen und als zweite Möglichkeit, ein Spiralkabel als Lade-Kabel einzusetzen.

Die Erfindung wird nachstehend an Hand der in der Zeichnung dargestellten Ausführungsbeispiele näher erläutert. Es zeigen:
- Fig. 1: eine schematische Darstellung einer Lade-Steckdose in Unterputz- Ausführung mit einem daran angeschlossenen Fahrzeug (Elektroauto), wobei eine Kommunikation zwischen Fahrzeug und Lade-Steckdose über das Lade-Kabel möglich ist,
- Fig. 2, 3: unterschiedliche Fronten einer mit einer Kommunikations-Baueinheit kom- binierten Lade-Steckdose in Unterputz-Ausführung,
- Fig. 4: eine schematische Darstellung einer Lade-Steckdose in Unterputz- Ausführung mit einem daran angeschlossenen Fahrzeug, wobei eine Kommunikation zwischen Fahrzeug und Lade-Steckdose über eine Funk- verbindung möglich ist,
- Fig. 5: eine alternative Ausführungsform zu den Figuren 1 und 2 unter Verwen- dung einer eine Kabelaufwicklung aufweisenden Lade-Steckdose für Wand- oder Bodenbefestigung,
- Fig. 6: eine alternative Ausführungsform zu den Figuren 1 und 2 unter Verwen- dung einer ein Spiralkabel aufweisenden Lade-Steckdose für Wand- oder Bodenbefestigung.

Die vorgeschlagene Lade-Steckdose eignet sich sowohl für eine Unterputz-Ausführung, als auch für Wandbefestigung, Pfostenbefestigung und Bodenbefestigung. Wesentlich sind dabei die Mittel, welche eine Daten-Kommunikation zwischen der Lade-Steckdose und dem zum Aufladen seiner Akkumulatoren daran angeschlossenen Fahrzeug ermöglichen. Nachfolgend werden die einzelnen Ausführungsformen näher beschrieben.

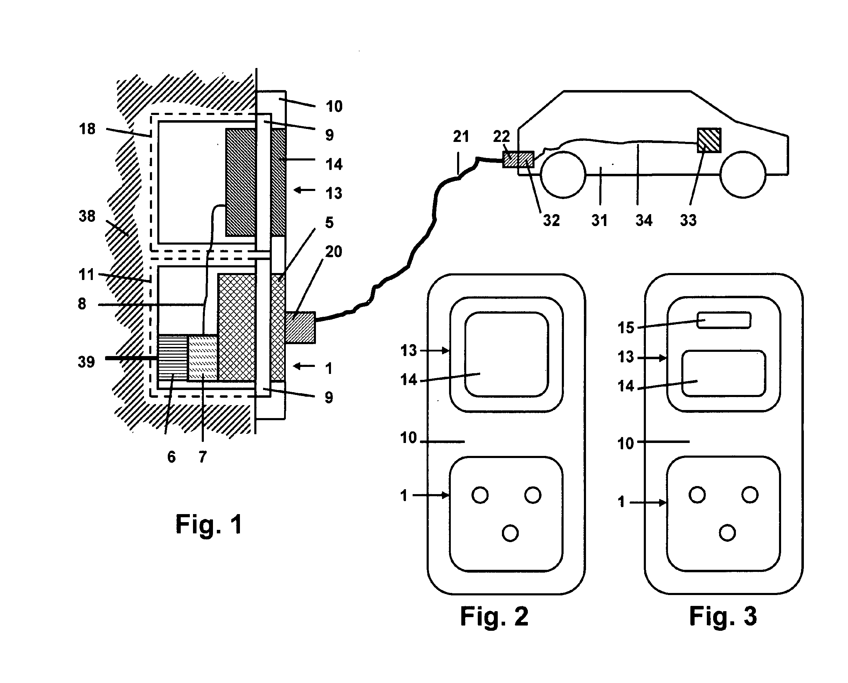

In Fig. 1 ist eine schematische Darstellung einer Lade-Steckdose in Unterputz-Ausführung mit einem daran angeschlossenen Fahrzeug dargestellt, wobei eine Daten-Kommunikation zwischen Fahrzeug und Lade-Steckdose über das Lade-Kabel möglich ist. Es ist eine Wand 38 (z. B. Wand einer Garage oder eines Carports) mit zwei darin montierten Unterputzdosen 11, 18 (handelsübliche UP-Gerätedosen aus Kunststoff mit 60 mm Durchmesser) zu erkennen,
- wobei in der einen Unterputzdose 18 ein Steckdosen-Gerätesockel 5 (elektrischer Ausgangs-Anschluss) mit elektrischen Kontakten für den Anschluss eines ersten Fahrzeug-Steckverbinders 20, Eingangs-Anschlussklemmen 6 und eine Auswerte-/Verarbeitungseinheit 7 installiert sind, um derart eine Lade-Steckdose 1 in Unterputz-Ausführung zu bilden und
- wobei in der anderen Unterputzdose 11 eine in Form eines Gerätesockels ausgebildete Anzeige-/Eingabeeinheit 14 installiert ist, um derart eine Kommunikations-Baueinheit 13 zu bilden.

Die Eingangs-Anschlussklemmen 6 stellen die Verbindung mit einem Anschlusskabel 39 her, über welches die elektrische Leistung zum Aufladen der Akkumulatoren eines Fahrzeuges zur Verfügung gestellt wird. Zum Aufladen eines Fahrzeuges 31 wird ein Lade-Kabel 21 mit seinem ersten Fahrzeug-Steckverbinder 20 in den Steckdosen-Gerätessockel 5 und mit seinem zweiten Fahrzeug-Steckverbinder 22 in eine am Fahrzeug 31 befestigte, korrespondierend hierzu ausgebildete elektrische Kupplung 32 eingesteckt.

Die Auswerte-/Verarbeitungseinheit 7 ist elektrisch zwischen den Eingangs-Anschlussklemmen 6 und den elektrischen Kontakten des Steckdosen-Gerätesockels 5 eingebunden und über ein Kabel 8 mit der Anzeige-/Eingabeeinheit 14 verbunden. Auf diese Weise ergibt sich für die gewünschte Daten-Kommunikation die Möglichkeit,
- außer der elektrischen Leistung Daten von der in einem Gebäude / Haus / Zimmer / Garage / Carport / Hof befindlichen Kommunikations-Baueinheit 13 mit Anzeige-/Eingabeeinheit 14 zum Fahrzeug 31 zu übertragen, anzuzeigen und auszuwerten, wie z. B.
   - die maximale Ladedauer,
   - eine definierte Zielzeit für den Ladeprozess,
   - ein bestimmtes Navigationsziel,
   - eine bestimmte gewünschte Route,
   - Telefonbucheinträge und / oder
- Daten vom Fahrzeug 31 zur in einem Gebäude / Haus / Zimmer / Garage / Carport / Hof befindlichen Kommunikations-Baueinheit 13 mit Anzeige-/Eingabeeinheit 14 zu übertragen, anzuzeigen und auszuwerten, wie z. B.
   - Verbrauchsdaten des Fahrzeuges,
   - Leistungsdaten des Fahrzeuges, wie aktueller Kilometer-Stand,
   - Statusdaten des Fahrzeuges, wie nächstes einzuhaltendes Werkstattintervall.

Selbstverständlich können auch alle den aktuellen Aufladeprozess kennzeichnenden Daten, wie insbesondere der aktuelle Ladestrom und der aktuelle Ladezustand der Akkumulatoren des Fahrzeuges zur Anzeige gebracht werden.

Für die Daten-Kommunikation ist auch das Fahrzeug 31 in entsprechender Weise ausgestattet, insbesondere ist ein zu einem Fahrzeugrechner 33 führendes Kabel 34 elektrisch an die Kupplung 32 angeschlossen. Der Fahrzeugrechner 33 besitzt neben weiteren Komponenten eine Anzeigeeinheit, eine Eingabeeinheit und eine Auswerte-/Verarbeitungseinheit,
- wodurch die über das Lade-Kabel übertragenen Daten ausgewertet und angezeigt werden können und / oder
- wodurch die an die Kommunikations-Baueinheit 13 zu sendenden Daten übertragen werden können.

Die Signalumsetzung, die Abspeicherung gewünschter / ermittelter Signalfolgen, die Wandelung von Daten, wie Ansteuerbefehlen und Meldesignalen, in entsprechende Leistungssignale und gegebenenfalls eine Verschlüsselung (Codierung / Decodierung) erfolgt jeweils in den Auswerte-Nerarbeitungseinheiten der Lade-Steckdose und des Fahrzeuges (dem Fahrzeug-Rechner zugeordnet respektive dort impliziert). Dabei kann die Datenübertragung über das Lade-Kabel z. B. durch Modulation einer oder mehrerer Trägerfrequenzen erfolgen (Trägerfrequenz-Datenübertragung über eine elektrische Leitung), d. h. die Auswerte-/Verarbeitungseinheiten enthalten derartige für die Daten-Kommunikation geeignete Modulations-/Demodulations-Einrichtungen.

Dabei können Mittel vorgesehen werden, welche eine Daten-Kommunikation zwischen Fahrzeug und Lade-Steckdose und umgekehrt erst dann freigeben, nachdem sich das Fahrzeug eindeutig identifiziert hat. Zweckmäßig wird eine derartige Identifizierung in der Anzeige-/Eingabeeinheit 14 ebenfalls zur Anzeige gebracht. Lade-Steckdose 1 und Kommunikations-Baueinheit 13 weisen jeweils eine Zentralscheibe 9 auf und sind in einem gemeinsamen Abdeckrahmen 10 (im einfachsten Fall ein Zweifach-Rahmen für senkrechte oder waagrechte Montage) integriert, so dass eine formschöne Einbindung / Integration in ein Installationsgeräte-Programm respektive Schalter- und Steckdosenprogramm sowie eine Kombination mit weiteren Geräten, beispielsweise Schaltern / Tastern / Dimmern / Steckdosen dieses Schalter-und Steckdosenprogramms möglich ist.

Beim Fahrzeug-Steckverbinder 22 und der korrespondierenden elektrischen Kupplung 32 handelt es sich vorteilhaft um standardisierte Komponenten (Industrie-Standard), wodurch es ermöglicht wird, dass die Akkumulatoren eines Fahrzeugs (Elektroautos) in schneller Art und Weise aufgeladen werden können, ohne dass dabei Adapter eingesetzt werden müssten. Die Ladespannung liegt im Bereich 400 V (vorzugsweise Dreiphasenwechselstrom) und die Stromstärke kann bis 63 A betragen.

An die elektrische Kupplung sind die Akkumulatoren des Fahrzeuges über einen Gleichrichter angeschlossen. Die Aufladung der Akkumulatoren selbst erfolgt vorzugsweise in geregelter Art und Weise über eine entsprechende Steuer-/Regelvorrichtung, welche in Form eines separaten Gerätes ausgebildet oder Teilkomponente des Fahrzeug-Rechners sein kann. Werden z. B. Lithium-lonen Akkumulatoren verwendet, so wird zunächst mit konstantem Anfangsstrom geladen. Erreicht der Akkumulator eine definierte Zellenspannung, so wird dieser Strom gehalten, bis der Ladestrom fast gegen Null zurückgefallen ist. Die Ladung wird beendet, wenn der Ladestrom einen definierten, sehr geringen Wert des Anfangsstroms erreicht bzw. nicht mehr weiter absinkt. Dementsprechend können Kennlinien offline erstellt und in der Steuer-/Regelvorrichtung respektive im Fahrzeug-Rechner abgespeichert werden. An Hand dieser Kennlinien und der aktuell erfassen Spannungs-und Stromwerte lassen sich während des Aufladeprozesses der aktuelle Ladestatus der Akkumulatoren, die Rest-Ladezeit und der Zeitpunkt des voraussichtlichen Lade-Endes berechnen. Selbstverständlich lässt sich an Hand der während es Aufladeprozesses erfassten Strom- und Spannungswerte für Verrechnungszwecke auch die für die Aufladung erforderlich gewordene Leistung berechnen.

In den Fig. 2 und 3 sind unterschiedliche Fronten einer mit einer Kommunikations-Baueinheit kombinierten Lade-Steckdose in Unterputz-Ausführung dargestellt. Es sind jeweils die Lade-Steckdose 1, die Kommunikations-Baueinheit 13 mit Anzeige-/Eingabeeinheit 14 und der Abdeckrahmen 10 zu erkennen. Zusätzlich ist bei der Ausführungsform gemäß Fig. 3 außer der Anzeige-/Eingabeeinheit 14 ein USB-Steckanschluss 15 in der Zentralscheibe 9 der Kommunikations-Baueinheit 13 integriert. Hierdurch ist z. B. ein Datenaustausch mit einem externen Rechner oder PC möglich, um z. B. gewisse Daten auf einem separaten Display anzuzeigen oder um dem Fahrzeug-Rechner 33 Navigationsziele / Routen / Telefonbucheinträge zuzuführen.

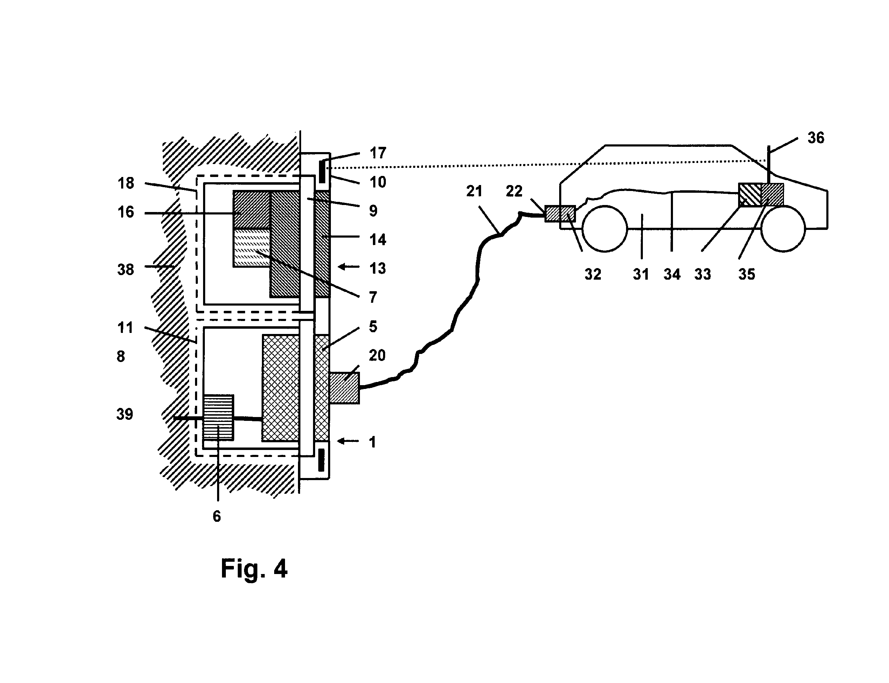

In Fig. 4 ist eine schematische Darstellung einer Lade-Steckdose in Unterputz-Ausführung mit einem daran angeschlossenen Fahrzeug dargestellt, wobei eine Daten-Kommunikation zwischen Fahrzeug und Lade-Steckdose über eine Funkverbindung möglich ist. Bei dieser alternativen Ausführungsform wird die unter Fig. 1 erläuterte, über das Lade-Kabel erfolgende Datenübertragung durch eine Funk-Datenübertragung zwischen einer Funkeinheit 16 der Kommunikations-Baueinheit 13 inklusive zugeordneter Antenne 17 und einer Funkeinheit 35 des Fahrzeuges 31 inklusive zugeordneter Antenne 36 ersetzt.

Dementsprechend sind die Funkeinheit 16 und die Auswerte-/Verarbeitungseinheit 7 in der Kommunikations-Baueinheit 13 angeordnet und mit der Anzeige-/Eingabeeinheit 14 verbunden. Die Antenne 17 kann in der Zentralscheibe 9 oder im Abdeckrahmen 10 integriert sein. Bei der Lade-Steckdose 1 sind die elektrischen Kontakte des Steckdosen-Gerätesockels 5 direkt mit den Eingangs-Anschlussklemmen 6 verbunden. Die Kabelverbindung zwischen Auswerte-/Verarbeitungseinheit 7 und Anzeige-/Eingabeeinheit 14 kann entfallen. Beim Fahrzeug 31 ist die Funkeinheit 35 mit dem Fahrzeug-Rechner 33 verbunden. Die unter Fig. 1 erläuterten Möglichkeiten der Daten-Kommunikation zwischen Lade-Steckdose und Fahrzeug und umgekehrt sind selbstverständlich auch für die Ausführungsform gemäß Fig. 4 gültig.

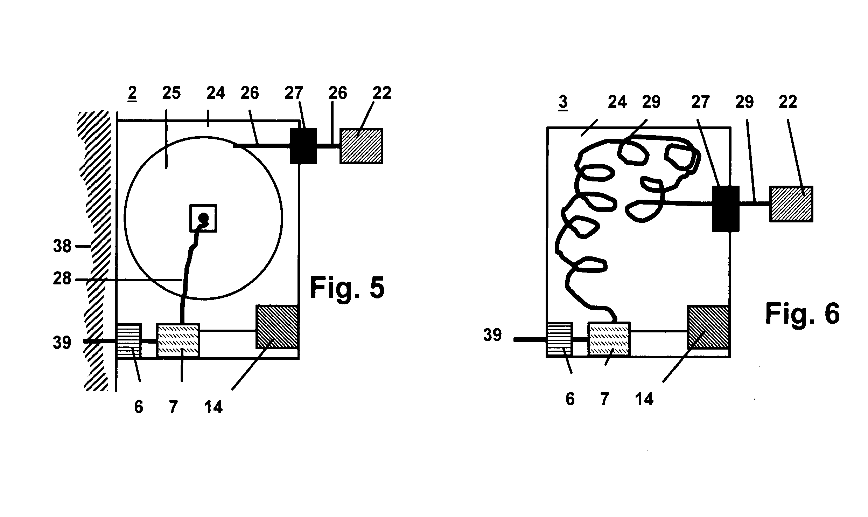

In Fig. 5 ist eine alternative Ausführungsform zu den Figuren 1 und 2 unter Verwendung einer eine Kabelaufwicklung aufweisenden Lade-Steckdose für Wand- oder Pfosten- oder Bodenbefestigung dargestellt. Die z. B. an der Wand 38 montierte Lade-Steckdose 2 besitzt im Innenraum ihres Gehäuses 24 eine automatische Kabelaufwicklung 25 mit einem darauf aufrollbaren respektive davon abrollbaren Lade-Kabel 26, welches über eine Kabel-Durchführung 27 aus dem Gehäuse 24 geführt wird und endseitig den zweiten Fahrzeug-Steckverbinder 22 (elektrischer Ausgangs-Anschluss) aufweist.

Die automatische Kabelaufwicklung 25 ist mit ihrem weiteren Ende über ein Kabel 28 mit der Auswerte-/Verarbeitungseinheit 7 verbunden, welche die Verbindung mit den Eingangs-Anschlussklemmen 6 und damit mit dem Anschlusskabel 39 herstellt. Die Auswerte-Nerarbeitungseinheit 7 ist mit der an der Frontseite des Gehäuses 24 zugänglichen Anzeige-/Eingabeeinheit 14 verbunden.

In Fig. 6 ist eine alternative Ausführungsform zu den Figuren 1 und 2 unter Verwendung einer ein Spiralkabel aufweisenden Lade-Steckdose für Wand- oder Bodenbefestigung dargestellt. Bei dieser Lade-Steckdose 3 wird die automatische Kabelaufwicklung 25 durch ein Spiralkabel 29 ersetzt, welches sich im "Ruhezustand", bei welchem kein Fahrzeug geladen wird, innerhalb des Gehäuses 24 befindet und welches über die Kabel-Durchführung 27 aus dem Gehäuse 24 gezogen werden kann, um derart den Anschluss des zweiten Fahrzeug-Steckverbinders 22 (elektrischer Ausgangs-Anschluss) an der korrespondierenden Kupplung 32 des Fahrzeuges 31 zu ermöglichen. Das weitere Ende des als Lade-Kabel dienenden Spiralkabels 29 ist mit der Auswerte-/Verarbeitungseinheit 7 verbunden, welche die Verbindung mit den Eingangs-Anschlussklemmen 6 und damit mit dem Anschlusskabel 39 herstellt. Die Auswerte-/Verarbeitungseinheit 7 ist mit der an der Frontseite des Gehäuses 24 zugänglichen Anzeige-/Eingabeeinheit 14 verbunden.

### Bezugszeichenliste

- 1: Lade-Steckdose in Unterputz-Ausführung
- 2: Lade-Steckdose für Wand- oder Bodenbefestigung
- 3: Lade-Steckdose für Wand- oder Bodenbefestigung (mit Spiralkabel)
- 4: -
- 5: Steckdosen-Gerätesockel für den Anschluss des ersten Fahrzeug- Steckverbinders (elektrischer Ausgangs-Anschluss)
- 6: Eingangs-Anschlussklemmen
- 7: Auswerte-/Verarbeitungseinheit
- 8: Kabel
- 9: Zentralscheibe
- 10: Abdeckrahmen
- 11: Unterputzdose
- 12: -
- 13: Kommunikations-Baueinheit
- 14: Anzeige-/Eingabeeinheit
- 15: USB-Stecker
- 16: Funkeinheit
- 17: Antenne
- 18: Unterputzdose
- 19: -
- 20: erster Fahrzeug-Steckverbinder
- 21: Lade-Kabel
- 22: zweiter Fahrzeug-Steckverbinder (elektrischer Ausgangs-Anschluss)
- 23: -
- 24: Gehäuse
- 25: automatischer Kabelaufwicklung
- 26: Lade-Kabel
- 27: Kabel-Durchführung
- 28: Kabel
- 29: Spiralkabel als Lade-Kabel
- 30: -
- 31: Fahrzeug
- 32: elektrische Kupplung zur Aufnahme des Fahrzeug-Steckverbinders
- 33: Fahrzeug-Rechner
- 34: Kabel
- 35: Funkeinheit
- 36: Antenne
- 37: -
- 38: Wand
- 39: Anschlusskabel

## Patentansprüche

1. Lade-Steckdose (1, 2, 3) zur Aufladung eines Elektroautos über ein zwischen Eingangs-Anschlussklemmen (6) der Lade-Steckdose und einer elektrischen Kupplung (32) des aufzuladenden Fahrzeugs (31) verlaufendes Lade-Kabel (21, 26, 29), mit Mitteln zur Daten-Kommunikation zwischen Lade-Steckdose und Fahrzeug, wobei diese Mittel eine der Lade-Steckdose (1, 2, 3) zugeordnete Auswerte-/Verarbeitungseinheit (7) inklusive einer daran angeschlossenen Anzeige-/Eingabeeinheit (14) sowie einen elektrisch mit der elektrischen Kupplung (32) verbundenen Fahrzeug-Rechner (33) mit Auswerte-/Verarbeitungseinheit umfassen und die Signalumwandlung der kommunizierten Daten jeweils in den Auswerte-/Verarbeitungseinheiten erfolgt.

2. Lade-Steckdose (1, 2, 3) nach Anspruch 1, **gekennzeichnet durch** eine Übertragung der kommunizierten Daten über das Lade-Kabel (21, 26, 29).

3. Lade-Steckdose (1, 2, 3) nach Anspruch 1, **gekennzeichnet durch** eine Funk-Übertragung der kommunizierten Daten zwischen einer der Lade-Steckdose (1, 2, 3) zugeordneten Funkeinheit (16) inklusive Antenne (17) und einer Funkeinheit (35) inklusive Antenne (36) des Fahrzeuges (31).

4. Lade-Steckdose (1, 2, 3) nach einem der vorstehenden Ansprüche, **dadurch gekennzeichnet, dass** ein USB-Stecker (15) elektrisch mit der Anzeige-/Eingabeeinheit (14) in Verbindung steht.

5. Lade-Steckdose (1) nach einem der vorstehenden Ansprüche, **gekennzeichnet durch** einen Steckdosen-Gerätesockel (5) als elektrischer Ausgangs-Anschluss zum Einführen eines Steckverbinders (20) eines Ladekabels (21).

6. Lade-Steckdose (1) nach Anspruch 5, **gekennzeichnet durch** eine Unterputz-Ausführung sowohl der Lade-Steckdose (1) als auch der Anzeige-/Eingabeeinheit (14).

7. Lade-Steckdose (2, 3) nach einem der Ansprüche 1 - 4, **gekennzeichnet durch** ein innerhalb des Gehäuses (24) der Lade-Steckdose (2, 3) befindliches und bedarfsweise aus dem Gehäuse herausziehbares Lade-Kabel (26, 29) inklusive endseitigem Steckverbinder (22) als elektrischer Ausgangs-Anschluss.

8. Lade-Steckdose (2) nach Anspruch 7, **gekennzeichnet durch** eine automatische Kabelaufwicklung (25) des Lade-Kabels (26).

9. Lade-Steckdose (3) nach Anspruch 7, **gekennzeichnet durch** ein Spiralkabel (29) als Lade-Kabel.
